# EUROPEAN PATENT APPLICATION

(11) **EP 4 741 027 A2**
(43) Date of publication of application: **13.05.2026**
(21) Application number: 26168451.8
(22) Date of filing: 16.12.2021
(51) Int. Cl.: A63F 13/355

(54) **APPARATUS, METHOD, AND COMPUTER PROGRAM**

(62) Divisional of application: 21967653.3
(71) Applicant: Intel Corporation, Santa Clara, CA 95054 (US)
(72) Inventor: BAO, Jia, Shanghai 200240 (CN); XIE, Chao, Shanghai 200120 (CN); CHEN, Yu, Shanghai City 200241 (CN); MAO, Xiaocheng, Shanghai 200242 (CN); WANG, Changliang, Bellevue, 98008 (US); YAO, Yong, San Jose, 97229 (US); SHI, Qiming, Shanghai 200241 (CN); TANG, Dongjie, Shanghai 200241 (CN); ZHANG, Hongyu, Shanghai 201112 (CN)
(74) Representative: 2SPL Patentanwälte PartG mbB

(57) **Abstract**

Examples relate to an apparatus comprising processing circuitry comprising a graphics processing unit (GPU) wherein the processing circuitry is configured to transcode one or more textures to a selected format for execution, and cache the transcoded textures for subsequent reuse.

## Description

### Background

Mobile cloud gaming services become increasingly more popular. In cloud gaming, cloud servers are equipped with server discrete graphics cards to accelerate games, such as mobile games. Though the server GPU is powerful enough to drive the rendering of multiple mobile games, there are some feature gaps between what a server GPU can offer and what a mobile game would requests. The lack of support for some commonly used texture compression formats is such a feature gap.

### Brief description of the Figures

Some examples of apparatuses and/or methods will be described in the following by way of example only, and with reference to the accompanying figures, in which
- Fig. 1a: shows a block diagram of an example of a caching apparatus or caching device;
- Figs. 1b and 1c: show block diagrams of examples of a computer system comprising a caching apparatus or caching device;
- Figs. 1d and 1e: show flow charts of examples of a caching method;
- Fig. 2a: shows a block diagram of an example of a driver apparatus or driver device;
- Fig. 2b: shows a flow chart of an example of a driver method;
- Fig. 3a: shows a block diagram of an example of a transcoding apparatus or transcoding device;
- Fig. 3b: shows a flow chart of an example of a transcoding method;
- Fig. 4: shows a flow chart of an example of an on-the-fly transcoding process;
- Fig. 5: shows a schematic diagram of an impact of transcoding for multiple game instances;
- Fig. 6: shows a schematic diagram of an example of a texture transcoding architecture; and
- Fig. 7: shows a flow chart of an example of a flow of a texture load unit.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

In the following description, specific details are set forth, but examples of the technologies described herein may be practiced without these specific details. Well-known circuits, structures, and techniques have not been shown in detail to avoid obscuring an understanding of this description. "An example/example," "various examples/examples," "some examples/examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply element item so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact.

As used herein, the terms "operating", "executing", or "running" as they pertain to software or firmware in relation to a system, device, platform, or resource are used interchangeably and can refer to software or firmware stored in one or more computer-readable storage media accessible by the system, device, platform, or resource, even though the instructions contained in the software or firmware are not actively being executed by the system, device, platform, or resource.

The description may use the phrases "in an example/example," "in examples/examples," "in some examples/examples," and/or "in various examples/examples," each of which may refer to one or more of the same or different examples. Furthermore, the terms "comprising," "including," "having," and the like, as used with respect to examples of the present disclosure, are synonymous.

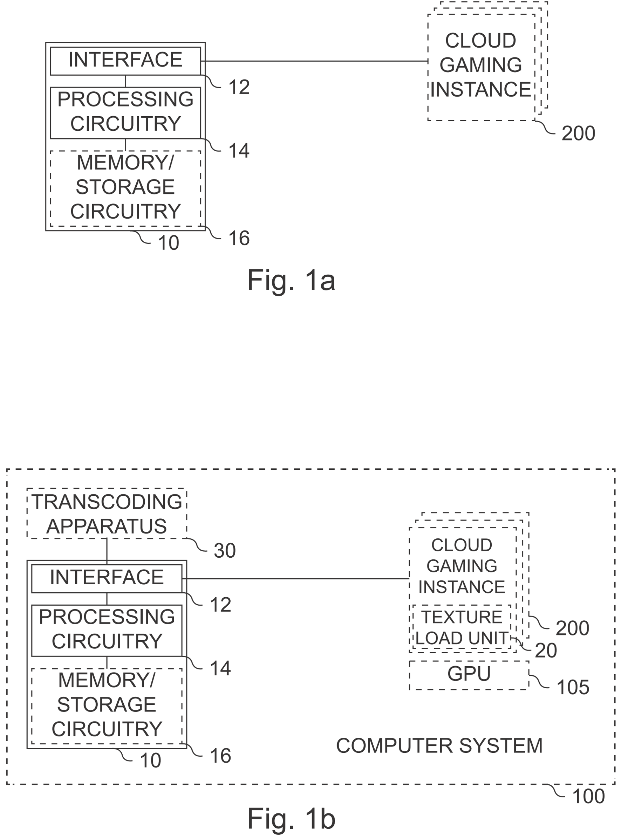

Fig. 1a shows a block diagram of an example of a caching apparatus 10 or caching device 10. The caching apparatus 10 comprises circuitry that is configured to provide the functionality of the caching apparatus 10. For example, the caching apparatus 10 comprises an interface (e.g., interface circuitry or a logical interface) 12, processing circuitry 14 and (optional) storage circuitry 16. For example, the processing circuitry 14 may be coupled with the interface 12 and with the storage circuitry 16. For example, the processing circuitry 14 may be configured to provide the functionality of the caching apparatus, in conjunction with the interface 12 (for exchanging information, e.g., one or more cloud gaming instances, a driver apparatus or device and/or a transcoding apparatus or device) and the storage circuitry 16 (for storing information). In particular, the interface 12 is suitable for, e.g., configured to, communicating/communicate with one or more cloud gaming instances 200.

Likewise, the caching device may comprise means that is/are configured to provide the functionality of the caching device 10. The components of the caching device 10 are defined as component means, which may correspond to, or implemented by, the respective structural components of the caching apparatus 10. For example, the caching device 10 comprises means for processing 14, which may correspond to or be implemented by the processing circuitry 14, means for communicating 12, which may correspond to or be implemented by the interface 12, and (optional) means for storing information 16, which may correspond to or be implemented by the storage circuitry 16.

The processing circuitry or means for processing is configured to obtain requests for cached transcoded versions of textures to be used in the one or more cloud gaming instances. The processing circuitry is configured to provide the cached transcoded versions of the textures to the one or more cloud gaming instances. In particular, the proposed concept may be applied to a plurality of cloud gaming instances being hosted by a computer system. Accordingly, the one or more cloud gaming instances may correspond to a plurality of cloud gaming instances.

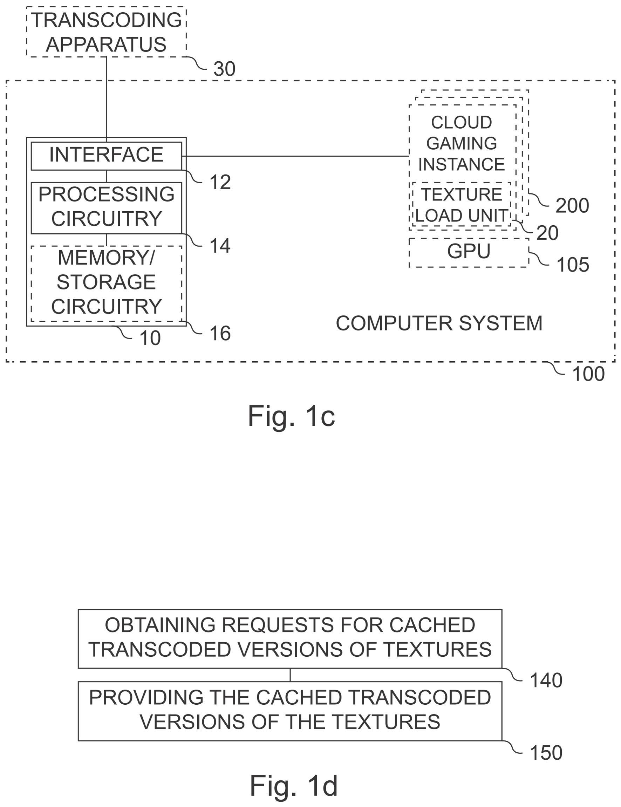

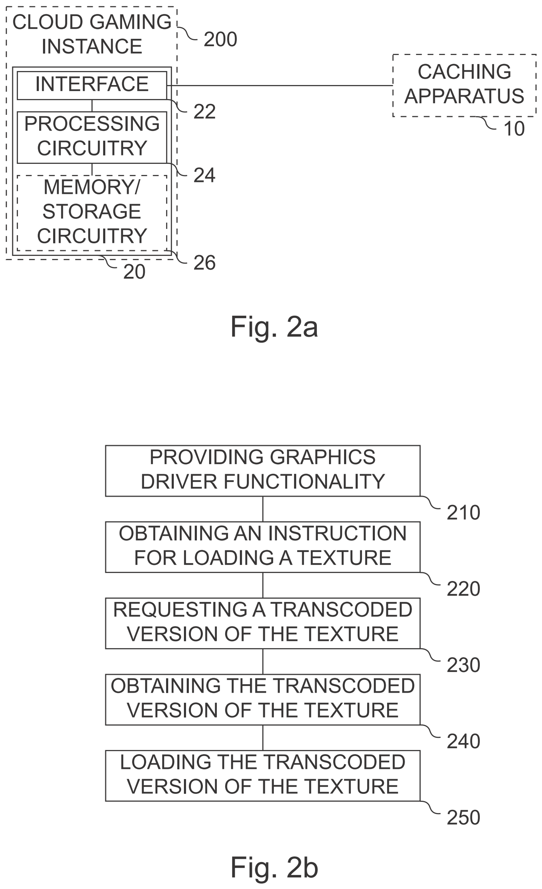

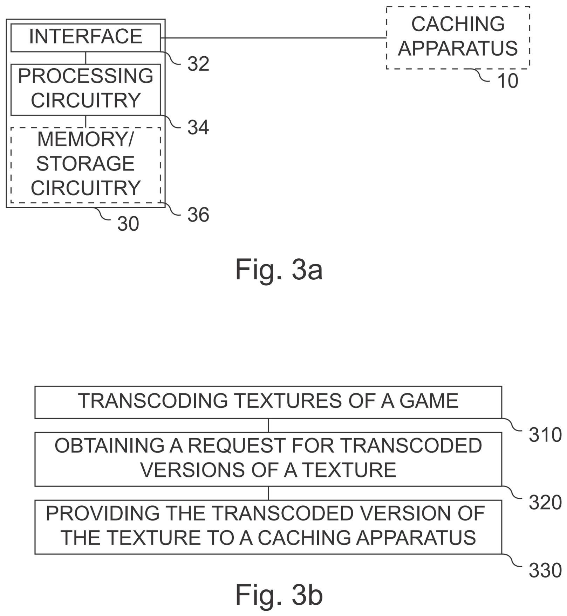

The caching apparatus 10 or caching device 10 can be seen as one component of a computer system 100. Figs. 1b and 1c show block diagrams of examples of the computer system 100 comprising a caching apparatus or caching device. In some examples, the computer system 100 is configured to host the one or more cloud gaming instances 200, e.g., using a graphics processing unit (GPU) 105 of the computer system 100. Alternatively, the one or more cloud gaming instances may be hosted by a different computer system. For example, each cloud gaming instance 200 may comprise a driver apparatus 20 or driver device 20 that will be introduced in connection with Fig. 2a. Additionally, as shown in Fig. 1b, the computer system 100 may comprise a transcoding apparatus 30 or transcoding device 30 (which will be introduced in mode detail in connection with Fig. 3a). Alternatively, as shown in Fig. 1c, the transcoding apparatus 30 or transcoding device 30 may be separate from the computer system 100 comprising the caching apparatus 10 or caching device 10. Fig. 1c shows a system comprising the computer system 100 and the separate transcoding apparatus 30. For example, the computer system may be a server computer, e.g., a rack-based server computer. In particular, the computer system may be a server computer for providing a cloud gaming service.

As is evident from Figs. 1b and 1c, the computer system may comprise the caching apparatus 10 or caching device 10, the one or more cloud gaming instances 200 with the driver apparatus 20 or driver device 20 and, optionally, the transcoding apparatus 30. While the components of the respective apparatuses and devices are described separately, they may refer to the same physical hardware. For example, the interface (circuitry) or means for communicating 12; 22; (32) of the respective apparatuses and devices 10; 20; (30) may be implemented by the same interface circuitry. The processing circuitry or means for processing 14; 24; (34) of the respective apparatuses 10; 20; (30) may be implemented by the same processing circuitry or processor(s). The storage circuitry or means for storing information 16; 26; (36) may be implemented by the same storage circuitry or storage devices. The respective apparatuses or devices 10; 20; (30) may be hosted separately by the computer system 100, e.g., as separate containers or virtual machines being executed on the hardware of the computer system.

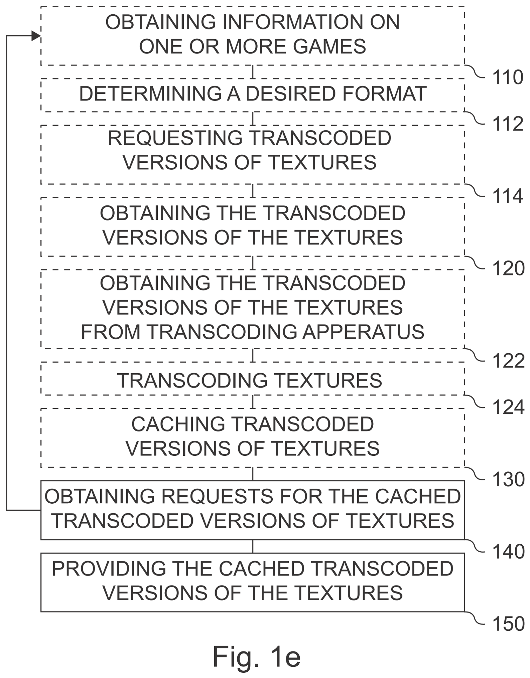

The proposed concept may also be embodied by a corresponding caching method. Figs. 1d and 1e show flow charts of examples of the corresponding caching method. The method comprises obtaining 140 requests for cached transcoded versions of textures to be used in one or more cloud gaming instances. The method comprises providing 150 the cached transcoded versions of the textures to the one or more cloud gaming instances.

For example, the computer system 100 may be used to perform the method of Figs. 1d or 1e. Additionally, the computer system 100 may host the one or more cloud gaming instances, with each cloud gaming instance being configured to perform a driver method that will be introduced in connection with Fig. 2b. Additionally, the computer system 100 may be configured to perform a transcoding method that will be introduced in connection with Fig. 3b.

In the following, the functionality of the caching apparatus 10, the caching device 10, the caching method and of a corresponding computer program is introduced in connection with the caching apparatus 10. Features introduced in connection with the caching apparatus 10 may be likewise included in the corresponding caching device 10, caching method and computer program.

The proposed concept is based on the insight, that different hardware, and in particular different graphics processing units (GPUs) support different types of texture compression formats. In many cases, this is of little relevance, as games are often developed for a specific hardware platform and thus include compressed textures that are compatible with the hardware platform. In some cases, however, this is not the case. Such a case may arise with respect to cloud gaming, and in particular with respect to mobile cloud gaming. In mobile cloud gaming, games that are originally developed for mobile devices, such as smartphones or tablet computers, are run by server computers and streamed to the mobile devices (e.g., to enable mobile devices with too little processing/graphics power to run the games). In many cases, the hardware of the server computers and the hardware of the original target platform (i.e., the mobile device) may differ in various respects, e.g., with respect to central processing unit (CPU) instruction sets (with CPUs of mobile devices often being based on the ARM instruction set and server CPUs often being based on the x86 instruction set), or with respect to the capabilities of the GPUs being used (such as the supported texture compression formats). In particular, server-grade GPUs might not support the texture compression format being used in many Android-based games, which are often used for mobile cloud gaming.

In such cases, two approaches are feasible - either the compressed textures are uncompressed by the software graphics driver and used in the respective cloud gaming instances. However, this negates the performance gains of the texture compression, such that only few instances of a particular game can be executed in parallel on the same computer system, e.g., due to memory restrictions. Alternatively, the driver may transcode the compressed textures to a format that is compatible with the GPU of the computer system and load the transcoded versions instead. This leads to additional load times, as the transcoding is computationally intensive and is performed separately in each gaming instances (as it is being done by the driver that is included in the cloud gaming instance). For example, the respective cloud gaming instances may be software containers or virtual machines that are hosted by the computer system 100, and which may be used to execute a game that is to be streamed to a mobile device.

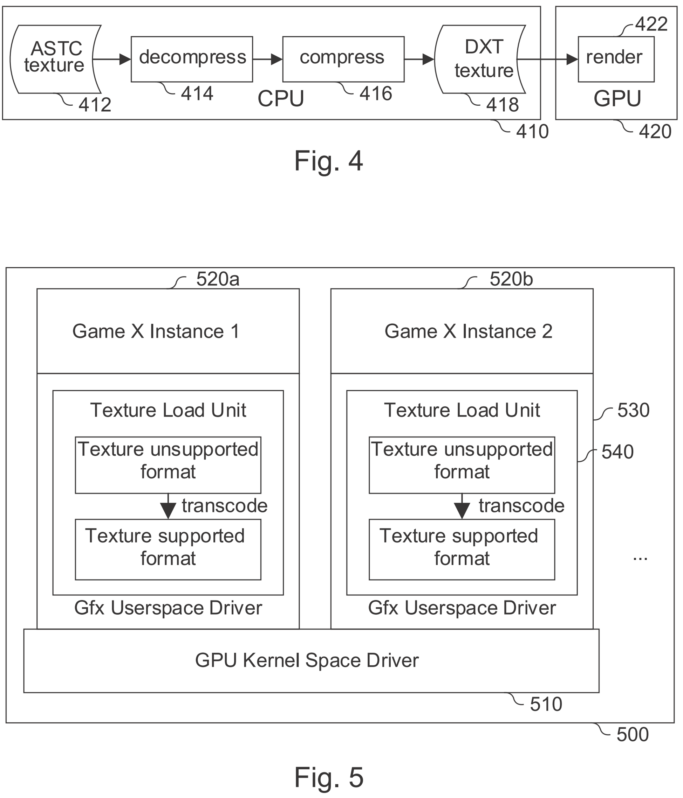

In the proposed concept, the transcoding of the textures is centralized and a caching mechanism is created that can be used to supply the respective cloud gaming instances (e.g., a texture load unit of a graphics driver 20) with the transcoded versions of the textures. The transcoded versions are cached centrally, so that the transcoded versions can be commonly used by all instances of a game being hosted on the computer system comprising the caching apparatus 10. In general, the transcoded versions of the texture may be versions of the respective textures that are compressed according to a different compression format than is being used for the respective textures that are included with the game. In other words, both the transcoded versions of the respective textures and the textures, as they are included with the game, are compressed, albeit according to different compression formats/standards. Examples of suitable compression standards are given with respect to Fig. 4. For example, the textures, as included with the game, may be compressed according to the ASTC (Adaptive Scalable Texture Compression) format. The transcoded versions of the textures may be compressed according to the DXT format or according to the BC7 format, which are more commonly supported by server-class GPUs.

The cached versions of the textures are provided upon request by the respective cloud gaming instances. Accordingly, the processing circuitry is configured to obtain (e.g., receive) the requests for cached transcoded versions of textures to be used in the one or more cloud gaming instances. For example, the requests may be obtained from texture load units of user mode graphics drivers being used in the respective cloud gaming instances. There texture load units, in turn, may be part of the respective user mode graphics drivers. Accordingly, the requests may be obtained (e.g., received) from the (graphics) drivers (e.g., driver apparatuses 20 or driver devices 20) that are included in the respective cloud gaming instances.

In general, each cloud gaming instance may be configured to execute (at least) one game, e.g., exactly one game. The transcoded textures being requested are textures that are to be used with said game. Accordingly, the cached transcoded versions of the textures may be transcoded versions of textures being included in games being executed in the respective cloud gaming instances. Moreover, the transcoded versions of the textures are requested in a format that is compatible with the GPU 105 of the computer system 100 to host the one or more cloud gaming instances. In other words, the cached transcoded versions are transcoded into a format that is supported by the GPU 105 of the computer system 100 being used to host the one or more cloud gaming instances. Therefore, the requests may indicate the textures being requested by the respective cloud gaming instances, and also, if not previously known, the desired format of the transcoded version. Accordingly, the requests may comprise identifiers for identifying the respective texture to be provided. The cached transcoded versions may be provided based on the identifiers included in the requests. For example, to enable a system without human intervention or preparation, the identifiers may be automatically generated. For example, the identifiers (which are also denoted keys) may be based on a hash value representing the respective texture, e.g., a hash value being calculated based on the compressed version of the texture that is included with the respective game. Collisions in the hashing process may be dealt with based on feedback from the respective cloud gaming instances, e.g., if the provided transcoded version of the texture leads to rendering errors. More details of a key collision mitigation scheme are introduced in connection with Fig. 5.

In some examples, the requests may comprise information on a desired format of the transcoded version. Alternatively, the information on the desired format may be pre-defined in the caching apparatus or determined based on the capabilities of the GPU of the computer system. In other words, the processing circuitry may be configured to determine the desired format of the textures (and thus the information on the desired format of the textures) based on a texture format being supported by the GPU of the computer system being used to host the one or more cloud gaming instances. Accordingly, the method may comprise determining 112 the desired format of the textures based on a texture format being supported by a graphics processing unit of a computer system being used to host the one or more cloud gaming instances. The cached transcoded versions are provided based on the (information on) the desired format.

With respect to the actual transcoding, one of at least three implementations may be chosen - the transcoding may be performed by a transcoding apparatus that is hosted by the computer system (shown in Fig. 1b), the transcoding may be performed by a transcoding apparatus that is separate from the computer system (shown in Fig. 1c), or the transcoding may be performed by the caching apparatus (not shown). In this case, the transcoding apparatus may be omitted from the computer system. In any of the above cases, the processing circuitry is configured to obtain the transcoded versions of the textures, e.g., by receiving the transcoded versions from the transcoding apparatus or by performing the transcoding.

For example, the processing circuitry may be configured to obtain the transcoded versions of the textures from the separate transcoding apparatus 30. Accordingly, the method may comprise obtaining 122 the transcoded versions of the textures from the separate transcoding apparatus. Again, the same information that can be used to identify the respective textures and format thereof may be used to request the transcoded versions of the textures. For example, the processing circuitry may be configured to request the transcoded versions of the textures based on the identifiers for identifying the respective textures to be provided (e.g., as received as part of the respective requests) and/or based on a desired format of the textures (e.g., as pre-defined or received as part of the respective requests). Accordingly, the method may comprise requesting 114 the transcoded versions of the textures based on identifiers for identifying the respective textures to be provided and/or based on a desired format of the textures. For example, the transcoded versions of the textures may be requested from the transcoding apparatus 30.

Alternatively, the caching apparatus may perform the transcoding. In other words, the processing circuitry may be configured to obtain the transcoded versions of the textures by transcoding the textures being included in games being executed in the one or more cloud gaming instances. Accordingly, the method may comprise obtaining 120 the transcoded versions of the textures by transcoding 124 the textures being included in games being executed in the one or more cloud gaming instances. For example, the processing circuitry may be configured to obtain the corresponding textures that are included with the game (e.g., from the one or more cloud gaming instances or from a central storage), and to transcode the textures that are included with the game to obtain the transcoded versions of the textures. For example, the processing circuitry may be configured to decompress the textures that are included with the game and recompress the decompressed textures (according to the desired format) to obtain the transcoded versions of the textures. For example, the textures may be transcoded based on the identifiers for identifying the respective textures to be provided (thus selecting which textures are to be transcoded) and based on the desired format (thus selecting the format to be used for recompressing the decompressed textures).

In general, different types of transcoding hardware may be used to perform the transcoding. For example, the processing circuitry may comprise one or more of a central processing unit, a graphics processing unit, a field-programmable gate array and an application-specific integrated circuit for transcoding. One or more of the central processing unit, the graphics processing unit, the field-programmable gate array the application-specific integrated circuit for transcoding may be used for transcoding the textures of the game. In other words, different types of hardware may be used for transcoding the textures.

In some examples, a predictive approach may be chosen. In general, only a limited number of different games are executed in the respective cloud gaming instances. Therefore, the respective textures of the limited number of games, or a subset thereof, may be transcoded in advance, so that the respective transcoded versions can be provided with a reduced delay. For example, the processing circuitry may be configured to obtain information on one or more games being executed in the one or more cloud gaming instances (e.g., from the respective cloud gaming instances or from a central configuration storage), and to obtain the transcoded versions of the textures for caching based on the information on the one or more games being executed in the one or more cloud gaming instances (e.g., from the transcoding apparatus or by transcoding the respective textures). Accordingly, the method may comprise obtaining 110 information on one or more games being executed in the one or more cloud gaming instances and obtaining 120 the transcoded versions of the textures for caching based on the information on the one or more games being executed in the one or more cloud gaming instances. This may be done in preparation, e.g., before the requests are received. In other words, the information on the one or more games being executed in the one or more cloud gaming instances may be obtained separately from the requests, e.g., before the requests. Alternatively, the information on the one or more games being executed in the one or more cloud gaming instances may be derived from the requests obtained from the respective cloud gaming instances. In other words, the information on the one or more games being executed in the one or more cloud gaming instances may be obtained within the requests. For example, the identifiers for identifying the respective textures to be provided may comprise the information on the one or more games. The processing circuitry may be configured to extract the information on the one or more games being executed in the one or more cloud gaming instances from the requests. For example, artificial intelligence and/or statistical models may be used to predict the textures to be requested by the one or more cloud gaming instances. For example, the processing circuitry may be configured to use artificial intelligence (e.g., a machine-learning model being trained using supervised learning) or statistical models to predict the textures being subsequently requested, e.g., based on the previously received requests. For example, the machine-learning model may be trained, using supervised learning, based on training samples comprising sets of previously obtained requests as training input data and sets of subsequently obtained requests as desired training output data. For example, transcoded versions may be obtained, e.g., requested or transcoded, in advance, i.e., before obtaining the respective requests. For example, the processing circuitry may be configured to provide an instruction to the transcoding apparatus, with the instruction comprising information on textures to be transcoded in preparation of (possible) subsequent requests. For example, the instruction comprising information on textures to be transcoded in preparation of (possible) subsequent requests may be based on the information on the one or more games, e.g., based on the predicted textures to be requested by the one or more cloud gaming instances.

Once the transcoded versions of the textures are obtained, they may be cached by the caching apparatus. In other words, the processing circuitry may be configured to cache the transcoded versions of the textures in a memory circuitry and/or a storage circuitry 16 of the caching apparatus. Accordingly, the method may comprise caching 130 the transcoded versions of the textures in a memory circuitry and/or a storage circuitry (of the caching apparatus/computer system). This caching may be performed in addition to caching being performed by the transcoding apparatus.

The processing circuitry is configured to provide (e.g., transmit, copy) the cached transcoded versions of the textures to the one or more cloud gaming instances. In particular, the cached transcoded versions of the textures may be provided to a user space graphics driver of the respective cloud gaming instances. For example, the processing circuitry may be configured to provide the transcoded versions to a texture load unit of a user space graphics driver being executed in the respective cloud gaming instance. Accordingly, the method may comprise providing 150 the transcoded versions to a texture load unit of a user space graphics driver being executed in the respective cloud gaming instance. For example, the texture load unit may be implemented by the driver apparatus or device 20 introduced in connection with Fig. 2a.

The interface 12 or means for communicating 12 of Figs. 1a to 1c may correspond to one or more inputs and/or outputs for receiving and/or transmitting information, which may be in digital (bit) values according to a specified code, within a module, between modules or between modules of different entities. For example, the interface 12 or means for communicating 12 may comprise circuitry configured to receive and/or transmit information.

For example, the processing circuitry 14 or means for processing 14 of Figs. 1a to 1c may be implemented using one or more processing units, one or more processing devices, any means for processing, such as a processor, a computer or a programmable hardware component being operable with accordingly adapted software. In other words, the described function of the processing circuitry 14 or means for processing may as well be implemented in software, which is then executed on one or more programmable hardware components. Such hardware components may comprise a general purpose processor, a Digital Signal Processor (DSP), a micro-controller, etc.

For example, the storage circuitry 16 or means for storing information 16 of Figs. 1a and 1d may comprise at least one element of the group of a computer readable storage medium, such as a magnetic or optical storage medium, e.g. a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the caching apparatus 10, caching device 10, caching method, computer program and computer system 100 are mentioned in connection with the proposed concept or one or more examples described above or below (e.g. Fig. 2a to 7). The caching apparatus 10, caching device 10, caching method, computer program and computer system 100 may comprise one or more additional optional features corresponding to one or more aspects of the proposed concept or one or more examples described above or below.

Fig. 2a shows a block diagram of an example of a driver apparatus 20 or driver device 20. The driver apparatus 20 comprises circuitry that is configured to provide the functionality of the driver apparatus 20. For example, the driver apparatus 20 comprises an interface (e.g., interface circuitry or a logical interface) 22, processing circuitry 24 and (optional) storage circuitry 26. For example, the processing circuitry 24 may be coupled with the interface 22 and with the storage circuitry 26. For example, the processing circuitry 24 may be configured to provide the functionality of the driver apparatus, in conjunction with the interface 22 (for exchanging information, e.g., with the caching apparatus or device 10 introduced in connection with Figs. 1a to 1c) and the storage circuitry 26 (for storing information). In particular, the interface 22 or means for communicating 22 is suitable for, e.g., configured to, communicating/communicate with the caching apparatus 10. Likewise, the driver device may comprise means that is/are configured to provide the functionality of the driver device 20. The components of the driver device 20 are defined as component means, which may correspond to, or implemented by, the respective structural components of the driver apparatus 20. For example, the driver device 20 comprises means for processing 24, which may correspond to or be implemented by the processing circuitry 24, means for communicating 22, which may correspond to or be implemented by the interface 22, and (optional) means for storing information 26, which may correspond to or be implemented by the storage circuitry 26.

The processing circuitry 24 or means for processing 24 is configured to provide a graphics driver functionality for a game being executed in the cloud gaming instance. The processing circuitry 24 or means for processing 24 is configured to obtain an instruction for loading a texture included in the game. The processing circuitry 24 or means for processing 24 is configured to request a transcoded version of the texture to be loaded from the caching apparatus. The processing circuitry 24 or means for processing 24 is configured to obtain the transcoded version of the texture from the caching apparatus. The processing circuitry 24 or means for processing 24 is configured to load the transcoded versions of the texture.

Fig. 2a further shows a cloud gaming instance 200, e.g., a software container or virtual machine being used to host/execute a game within the context of a cloud gaming service, comprising the driver apparatus 20 or driver apparatus 20. Figs. 1b and 1c show schematic diagrams of examples of a computer system 100 comprising a plurality of cloud gaming instances 200, with each cloud gaming instance comprising a separate instance of the driver apparatus or driver device 20 (denoted "texture load unit"). For example, the driver apparatus or driver device 20 may implement a texture load unit for loading textures for the game being executed within the cloud gaming instance.

Fig. 2b shows a flow chart of an example of a corresponding driver method for a cloud gaming instance. The method comprises providing 210 a graphics driver functionality for a game being executed in the cloud gaming instance. The method comprises obtaining 220 an instruction for loading a texture included in the game. The method comprises requesting 230 a transcoded version of the texture to be loaded from a caching apparatus. The method comprises obtaining 240 the transcoded version of the texture from the caching apparatus. The method comprises loading 250 the transcoded versions of the texture.

In the following, the functionality of the driver apparatus 20, the driver device 20, the driver method and of a corresponding computer program is introduced in connection with the driver apparatus 20. Features introduced in connection with the driver apparatus 20 may be likewise included in the corresponding driver device 20, driver method and computer program.

Figs. 2a and 2b relate to a driver apparatus 20, device 20, method and computer program, which is to be used with a caching apparatus, e.g., the caching apparatus 10 introduced in connection with Figs. 1a to 1c. In particular, the driver apparatus 20, device 20, method and computer program are used to load the transcoded versions of the textures that are provided by the caching apparatus 10 of Figs. 1a to 1c into the game being executed within the cloud gaming instance 100.

The driver apparatus 20 provides the graphics driver functionality for the game being executed in the cloud gaming instance. In other words, the driver apparatus 20 is used as driver, and in particular as graphics driver within the cloud gaming instance. For example, the graphics driver functionality may be provided to calculate (i.e., render) graphics of the game using a graphics processing unit 105 of a computer system 100 comprising the driver apparatus. The game accesses the GPU 105 of the computer system 100 (shown in Figs. 1b and 1c) via the driver apparatus 20. In other words, the driver apparatus 20 acts as interface between the game and the GPU of the computer system.

In the present disclosure, the driver apparatus is used in the context of cloud gaming instances. As outlined in connection with Figs. 1a to 1b, a cloud gaming instance is a software container or virtual machine that is being hosted by the computer system. For example, the computer system may be operated using an operating system or hypervisor, and the one or more cloud gaming instances may be hosted within the operating system or hypervisor. Accordingly, the respective cloud gaming instances might only have indirect access to the GPU of the computer system. To achieve 3D acceleration, each cloud gaming instance comprises a user space (i.e., user mode) driver (i.e., the driver apparatus 20), which acts as intermediary between the applications being executed in the respective cloud gaming instances (such as the game) and the kernel space graphics driver that is used by the operating system or hypervisor (see e.g., Fig. 5, where the user space drivers 20 and the kernel space driver 610 are shown). Accordingly, the driver functionality may be provided in user space. In the present disclosure, the terms "user space" (or user mode) and "kernel space" are used. User space and kernel space are two separate portions of virtual memory being used in the computer system. A driver that is provided in user space can be directly accessed by the respective user space application program (e.g., the game) accessing it. A kernel space driver is tightly interfaced with a kernel of the operating system or hypervisor, and usually cannot be accessed directly by a user space program.

The driver apparatus 20 implements a texture load unit of the (user space) graphics driver of the cloud gaming instance - it obtains an instruction for loading a texture included in the game (e.g., from the game), and loads a transcoded version of the texture in response to the instruction. In other words, instead of loading the texture that is included with the game, it loads the transcoded version of the texture, which it requests and obtains from the caching apparatus. In other words, the transcoded version of the texture may be a transcoded version of a texture being included in the game. Both the transcoded version of the texture and the texture that is included with the game may be compressed using texture compression. For example, the transcoded version of the texture may be based on a different texture compressions algorithm than the texture that is included with the game. For example, as outlined in connection with Figs. 1a to 1e, the transcoded version of the texture may be transcoded into a (compressed) format that is supported by the graphics processing unit of the computer system. The transcoded version of the texture may be loaded instead of the texture included with the game. In other words, the (compressed) texture that is included with the game is replaced with the transcoded version of the texture.

The transcoded version is requested and obtained from the caching apparatus. Therefore, as outlined in connection with Figs. 1a and 1b, the request may comprise information for identifying the texture that is requested. For example, the request may comprise one or more of an identifier for identifying the texture, information on a desired format of the transcoded version and information on the game being executed in the cloud gaming instance. For example, the processing circuitry may be configured to determine the identifier for identifying the texture using a hashing algorithm, e.g., by applying the hashing algorithm on the texture that is included with the game. For example, the processing circuitry may be configured to determine the information on the game being executed in the cloud gaming instance, e.g., based on a configuration information of the cloud gaming instance or based on one or more processes being executed in the cloud gaming instance. The processing circuitry may be configured to determine the information on the desired format based on the capabilities of the GPU 105 of the computer system being used to host the cloud gaming instance or based on a configuration information of the cloud gaming instance or a pre-defined setting regarding the desired format.

In response to the request, the transcoded version of the texture is obtained (e.g., received) from the caching apparatus. Once the transcoded version of the texture is obtained, it is loaded (e.g., instead of the texture that is included with the game). For example, the transcoded version may be loaded in a graphics memory of the GPU of the computer system or in a virtual memory region associated with the GPU of the computer system, e.g., for use in the game.

The interface 22 or means for communicating 22 of Fig. 2a may correspond to one or more inputs and/or outputs for receiving and/or transmitting information, which may be in digital (bit) values according to a specified code, within a module, between modules or between modules of different entities. For example, the interface 22 or means for communicating 22 may comprise circuitry configured to receive and/or transmit information.

For example, the processing circuitry 24 or means for processing 24 of Fig. 2a may be implemented using one or more processing units, one or more processing devices, any means for processing, such as a processor, a computer or a programmable hardware component being operable with accordingly adapted software. In other words, the described function of the processing circuitry 24 or means for processing may as well be implemented in software, which is then executed on one or more programmable hardware components. Such hardware components may comprise a general purpose processor, a Digital Signal Processor (DSP), a micro-controller, etc.

For example, the storage circuitry 26 or means for storing information 26 of Fig. 2a may comprise at least one element of the group of a computer readable storage medium, such as a magnetic or optical storage medium, e.g. a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the driver apparatus 20, driver device 20, driver method and corresponding computer program are mentioned in connection with the proposed concept or one or more examples described above or below (e.g. Fig. 1a to 1e, 3a to 7). The driver apparatus 20, driver device 20, driver method and corresponding computer program may comprise one or more additional optional features corresponding to one or more aspects of the proposed concept or one or more examples described above or below.

Fig. 3a shows a block diagram of an example of a transcoding apparatus 30 or transcoding device 30. The transcoding apparatus 30 comprises circuitry that is configured to provide the functionality of the transcoding apparatus 30. For example, the transcoding apparatus 30 comprises an interface (e.g., interface circuitry or a logical interface) 32, processing circuitry 34 and (optional) storage circuitry 36. For example, the processing circuitry 34 may be coupled with the interface 32 and with the storage circuitry 36. For example, the processing circuitry 34 may be configured to provide the functionality of the transcoding apparatus, in conjunction with the interface 32 (for exchanging information, e.g., with a caching apparatus or device) and the storage circuitry 36 (for storing information). In particular, the interface 32 or means for communicating 32 is suitable for, e.g., configured to, communicating/communicate with the caching apparatus 10 (e.g., the caching apparatus 10 introduced in connection with Figs. 1a to 1b.

Likewise, the transcoding device may comprise means that is/are configured to provide the functionality of the transcoding device 30. The components of the transcoding device 30 are defined as component means, which may correspond to, or implemented by, the respective structural components of the transcoding apparatus 30. For example, the transcoding device 30 comprises means for processing 34, which may correspond to or be implemented by the processing circuitry 34, means for communicating 32, which may correspond to or be implemented by the interface 32, and (optional) means for storing information 36, which may correspond to or be implemented by the storage circuitry 36.

The processing circuitry 34 or means for processing 34 is configured to transcode textures of a game to be executed in one or more cloud gaming instances. The processing circuitry 34 or means for processing 34 obtain a request for a transcoded version of a texture from the caching apparatus. The processing circuitry 34 or means for processing 34 provide the transcoded version of the texture to the caching apparatus.

For example, the transcoding apparatus may be comprised by a computer system, e.g., the computer system 100 of Figs. 1a or 1b or a computer system that is separate from the computer system 100 shown in connection with Fig. 1c.

Fig. 3b shows a flow chart of an example of a corresponding transcoding method. The method comprises transcoding 310 textures of a game to be executed in one or more cloud gaming instances. The method comprises obtaining 320 a request for a transcoded version of a texture from the caching apparatus. The method comprises providing 330 the transcoded version of the texture to the caching apparatus. For example, the transcoding method may be performed by a computer system, e.g., by a transcoding apparatus being hosted by a computer system.

In the following, the functionality of the transcoding apparatus 30, the transcoding device 30, the transcoding method and of a corresponding computer program is introduced in connection with the transcoding apparatus 30. Features introduced in connection with the transcoding apparatus 30 may be likewise included in the corresponding transcoding device 30, transcoding method and computer program.

In some examples, as shown in connection with Figs. 1a to 1e, the caching apparatus may be tasked with transcoding the textures to obtain the transcoded versions of the textures. In some examples, however, the transcoding is performed by a transcoding apparatus that is separate from the caching apparatus. Figs. 3a and 3b relate to said transcoding apparatus.

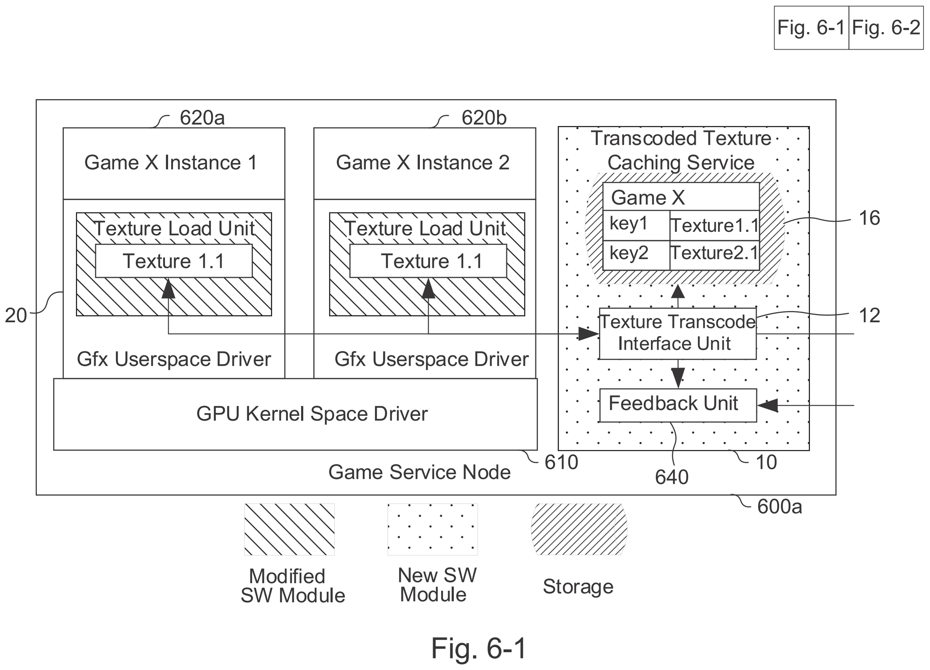

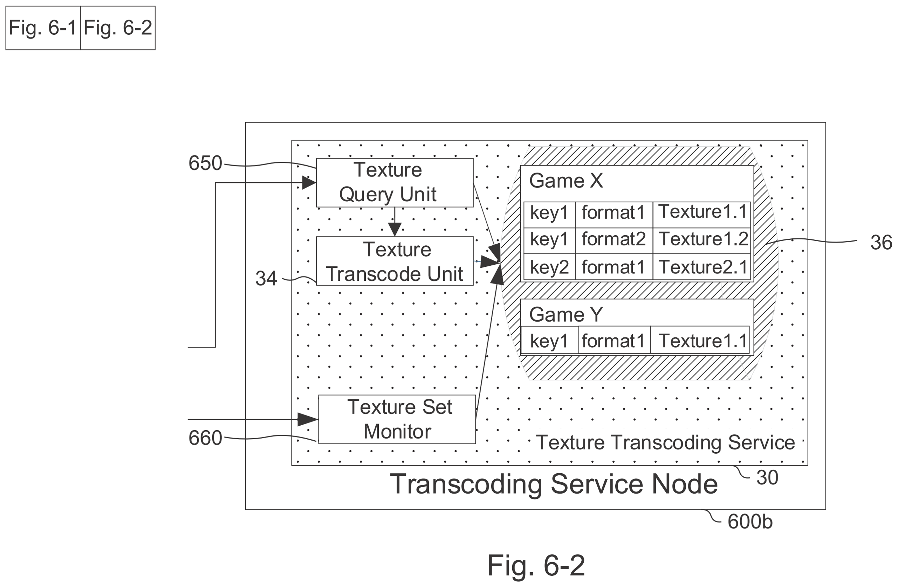

As the name indicates, the transcoding apparatus may primarily serve the function of transcoding the textures of the game to be executed in one or more cloud gaming instances (e.g., as shown in connection with Figs. 2a and 2b). Thus, the processing circuitry is configured to transcode the textures of a game to be executed in one or more cloud gaming instances. For example, the processing circuitry may be configured to obtain the corresponding textures that are included with the game (e.g., from the respective cloud gaming instances, from the caching apparatus or from a central storage), and to transcode the textures that are included with the game to obtain the transcoded versions of the textures. For example, the processing circuitry may be configured to decompress the textures that are included with the game and recompress the decompressed textures (according to the desired format) to obtain the transcoded versions of the textures. For example, the textures may be transcoded based on the identifiers for identifying the respective textures to be provided (thus selecting which textures are to be transcoded) and based on the desired format (thus selecting the format to be used for recompressing the decompressed textures). For example, as shown in Fig. 6, the textures may be transcoded according to different desired formats (e.g., if different desired formats are likely to be requested for cloud gaming instances being hosted on computer systems with different GPUs), and/or textures of different games may be transcoded.

In general, different types of transcoding hardware may be used to perform the transcoding. For example, the processing circuitry may comprise one or more of a central processing unit, a graphics processing unit, a field-programmable gate array and an application-specific integrated circuit for transcoding. One or more of the central processing unit, the graphics processing unit, the field-programmable gate array the application-specific integrated circuit for transcoding may be used for transcoding the textures of the game. In other words, different types of hardware may be used for transcoding the textures.

In various examples, the processing circuitry may be configured to cache the transcoded versions of the textures, e.g., in the storage circuitry 36. For example, the processing circuitry may be configured to proactively transcode the textures to provide transcoded versions of the textures (i.e., before they are requested), to cache the transcoded versions of the textures, and to provide the respective transcoded versions to the caching apparatus upon request. For example, the processing circuitry may be configured to obtain (e.g., receive) an instruction from the caching apparatus, with the instruction comprising information on textures to be transcoded in preparation of (possible) subsequent requests. The processing circuitry may be configured to transcode the textures according to the instruction. For example, the processing circuitry may be configured to cache transcoded versions of the textures that are transcoded according to different formats and/or to cache transcoded versions of the textures of different games.

The transcoded versions are then requested by, and provided to (e.g., transmitted to), the caching apparatus. The processing circuitry is configured to obtain a request for a transcoded version of a texture from the caching apparatus, and to provide the transcoded version of the texture to the caching apparatus in response to the request. For example, the request may comprise one or more of an identifier for identifying the texture to be provided and a desired format of the texture. The processing circuitry may be configured to provide the (cached) transcoded versions based on the identifier and/or based on the desired format.

The interface 32 or means for communicating 32 of Fig. 3a may correspond to one or more inputs and/or outputs for receiving and/or transmitting information, which may be in digital (bit) values according to a specified code, within a module, between modules or between modules of different entities. For example, the circuitry 32 or means for communicating 32 may comprise circuitry configured to receive and/or transmit information.

For example, the processing circuitry 34 or means for processing 34 of Fig. 3a may be implemented using one or more processing units, one or more processing devices, any means for processing, such as a processor, a computer or a programmable hardware component being operable with accordingly adapted software. In other words, the described function of the processing circuitry 34 or means for processing may as well be implemented in software, which is then executed on one or more programmable hardware components. Such hardware components may comprise a general purpose processor, a Digital Signal Processor (DSP), a micro-controller, etc.

For example, the storage circuitry 36 or means for storing information 36 of Fig. 3a may comprise at least one element of the group of a computer readable storage medium, such as a magnetic or optical storage medium, e.g. a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the transcoding apparatus 30, transcoding device 30, transcoding method 30 and corresponding computer program are mentioned in connection with the proposed concept or one or more examples described above or below (e.g. Fig. 1a to 2b, 4 to 7). The transcoding apparatus 30, transcoding device 30, transcoding method 30 and corresponding computer program may comprise one or more additional optional features corresponding to one or more aspects of the proposed concept or one or more examples described above or below.

Various examples of the present disclosure relate to a concept for low-overhead texture transcoding for multi-instance mobile cloud gaming.

Texture assets increasingly become larger and more detailed in line with the advances of the game industry. Texture compression is a specialized form of image compression designed for storing texture maps in 3D computer graphics rendering systems, so that the GPU (Graphics Processing Unit) can process them with random access without decompressing them. There are various texture compression formats thar are used on different platforms and supported by different GPU vendors. For example, the compression format DXT is used on the Windows, Linux, MacOS, Xbox One, and WebGL platforms and is purportedly supported by all desktop/server GPUs. The compression format BC7 is used on the Windows platform and is supported by all desktop/server GPUs that support DirectX 11. The compression format ETC/ETC2 (Ericsson Texture Compression) is used on the Android and Linux platforms and is included in the graphics standards OpenGL (Open Graphics Language) ES 3.0, Vulkan and Metal Mobile GPU, OpenGL 4.3 desktop GPU, optional for OpenGL ES2.0 Mobile GPUs. The compression format PVRTC (PowerVR Texture Compression) is used on the iOS platform and is supported by PowerVR GPUs. The compression format ASTC (Adaptive Scalable Texture Compression) is used on Android and tvOS and is supported by Mobile GPUs.

A server GPU, which might only natively support DXT and/or BC7, might be considered not to be suitable for serving mobile cloud game tasks, or incur additional overhead, due to lack of support for ETC/ETC2 or ASTC. In particular, many server-class GPUs do not support ASTC, while ASTC is becoming popular in mobile games. The proposed concept identifies this omission as a feature gap with respect to a use of such server-class GPUs in mobile cloud gaming. As a workaround that is implemented in the software driver, the unsupported compression format may be decompressed to raw RGB (Red-Green Blue, 24 bits per pixel (bpp)) or ARGB (Alpha RGB, 32bpp), or the unsupported format may be transcoded to a certain native supported format. Both approaches may be considered to be flawed.

In the first workaround approach, the benefit of texture compression is lost. The uncompressed textures result in much larger data sizes, and may thus require a larger PCI bandwidth, higher GPU rendering utilization etc., which may lead to worse density and worse performance. As an example, a server-class GPU may be equipped with 8GB GDDR (Graphics Double Data Rate) graphics memory. A mobile game such as King of Glory has a ~400MB graphics memory footprint at a typical scenario when textures are compressed (using ASTC). The same game has a ~1.4GB graphic memory footprint when textures are not compressed. The maximum instances one 8 GB-GPU can support is 10 when compression is used, and fewer than three when uncompressed textures are used. As another example, on the same server-grade GPU, popular mobile game Genshin may reach at most 10fps (frames per second) with all textures decompressed and processed on GPU and 30 fps when (ASTC) compression is used.

The second approach, the on-the-fly texture transcoding (which is illustrated in Fig. 4), is at the cost of CPU utilization. While arguments can be made that transcoding usually happens only during loading of a scene, therefore minimizing its impact on the user experience, this is not true in mobile cloud gaming. Fig. 4 shows a flow chart of an example of an on-the-fly transcoding process. In this process, the CPU 410 obtains the ASTC texture 412, decompresses 414 is and re-compresses 416 the result to obtain a DXT texture 418, which is then rendered 422 by the GPU.

In mobile cloud gaming, a server node may serve tens or more than a hundred gaming instances concurrently. These game instances share the same host system resources. The transcoding task for each individual game instances generally happens independently from each other and is therefore duplicated for the same game titles. This CPU intensive task from one game instance may impact other instances due to shared CPU overload, shared cache throttling (due to large texture data access), DRAM (Dynamic Random Access Memory) bandwidth throttling, etc. Fig. 5 shows a schematic diagram of an impact of transcoding for multiple game instances. Fig. 5 may illustrate transcoding for mobile cloud gaming on multiple game instances. In Fig. 5, the server node 500 hosts multiple instances 520a; 520b of Game X. Both instances use the same GPU kernel space driver, and each instances comprises a separate graphics user space driver 530, which includes a texture load unit 530. The texture load unit may be used transcode textures in an unsupported format to textures in a supported format.

As an example, the game Genshin packages only ASTC compressed textures. Without ASTC support, the transcoding to DXT for the 720p resolution assets takes additional 20+ seconds for every game instance even on multi-core server CPUs.

Caching is sometimes used in graphics drivers with respect to shaders. Shader program compilation is a time-intensive task in GPU graphics rendering. The graphics user space driver may use a unit named "shader cache" to cache compiled shader programs. The compiled shaders may be indexed by a hash from shader sources and stored in a storage directory for reuse. This shader caching technique is to avoid cost of shader compilation but it cannot be applied to the scenario at hand, i.e., to avoid cost of texture transcoding. The shader cache is generally stored in private directories which only one game engine can access. Therefore, its advantage is limited.

Various examples of the present disclosure provide a scalable and low-cost sharing texture transcoding pooling technique for mobile cloud gaming to mitigate this additional effort. In the present disclosure, a complete scalable and sharable solution for texture transcoding is proposed, in order to address the gap of server/desktop GPU to serve mobile cloud gaming business. The transcoding concept is out of the context of cloud game engines, thus it has no or little impact to game runtime performance. and it can increase or maximize reuse for all game instances across a cloud cluster. Various examples thus relate to texture transcoding, texture sharing, transcoded texture caching, and/or transcoded texture pooling.

In the proposed concept, a transcoded texture pool is used for addressing this challenge with respect to mobile cloud gaming. An independent service of texture transcoding is provided, which may be run on an independent server node to provide globally (e.g., to the entire service cluster) a texture query and transcoding service in order to support heterogenous GPU architectures, instead of embedding such transcoding inside gaming instances.

Fig. 6 shows a schematic diagram of an example of a texture transcoding architecture. The proposed concept includes two nodes, a game service node 600a (which may correspond to the computer system 100 introduced in connection with Figs. 1a to 1c) and a transcoding service node 600b. Alternatively, a single node may be used that includes the components of the game service node 600a and the transcoding service node 600b. The game service node comprises a GPU kernel space driver 610 and multiple instances 620a; 602b of Game X (e.g., which may correspond to the one or more cloud gaming instances 200). Each of the instances comprises a graphics user space driver 20 (which may correspond to the driver apparatus or device 20 introduced in connection with Figs. 2a and 2b). The game service node further comprises a transcoded texture caching servicer 10 (which may correspond to the caching apparatus 10 introduced in connection with Figs. 1a to 1e). The transcoded texture caching service 10 comprise a storage 16, which stores textures for Game X. The textures are accessible via key. The transcoded texture caching service 10 comprises a texture transcode interface unit 12, 14. The transcoded texture caching service 10 comprises a feedback unit 640. A texture load unit of the respective user space graphics drivers 20 of the game instances sends requests for the textures to be loaded to the texture transcode interface unit 12, 14 and retrieves the required textures from the storage 16. The texture transcode interface unit 12, 14 connects to a texture query unit 650 of a texture transcoding service 30 (which may correspond to the transcoding apparatus 30) that is hosted on the transcoding service node 600b. The texture query unit either obtains the desired textures from the storage 36 of the texture transcoding service 30 or instructs a texture transcode unit of the texture transcoding service 30 transcode the desired textures and store them in the storage 36. The storage 36 may comprise transcoded textures of multiple games (Game X and Game Y in the example shown in Fig. 6), which may be stored in different formats (format1 and format2 in the example), and which may be accessible via the key. A texture set monitor 660 of the texture transcoding service communicates with the feedback unit 640 and with the storage 36. Of the components listed above, the transcoded texture caching service 10 and the texture transcoding service 30 may be considered to be new relative to a system that does not use caching, while the user mode graphics driver 20 is modified. For example, respective services may be implemented using software (SW).

The texture transcoding service (TTS) 30 is a service that responsible for providing transcoding a texture from a source format to a destination format. It may be located on any service node independent of gaming services. It may comprise one or more of the following three functional units. the texture query unit 650 queries the backend storage database for a particular game with a matching key and format. If the query is a hit, the transcoded texture is returned to the local texture transcode interface unit of the transcoded texture caching service 10. The texture transcoding unit (TTU) 34 transcodes the received texture to the desired format and stores it in backend database 36. By design the TU might be employed for any (texture, format) request for the first time. The transcoding may cause a delay in returning the desired data. An offline warmup of the database by pre-launching the game scenarios may mitigate the delay. As cloud gaming vendors usually have a limited number of game tile list, such a warmup may be practical for them to do so. The texture set monitor 660 (TSM) gathers the feedback from the transcoded texture caching service (TTCS) 10 feedback unit (FU) 640. It may perform the following jobs based on some algorithms or an AI (artificial intelligence) model. For example, the TSM may adjust the texture set based on the statistics data from all game instances. The adjustment may include marking some textures to be active, which will be loaded to a game instance during a start-up sequence of the instance, or some textures may be marked to be inactive which may shift them to a second memory level, for example persistent memory. For example, the TSM may determine whether the texture key needs to be checked. If required, a request may be submitted to the FU 640. When the texture original data is accepted, a data check between the original data and stored data that is stored in the TTS pool can be performed in a in case key generation issue.

The transcoded texture caching service (TTCS) 10 is a functional service located on the game service nodes, i.e., the node being used for hosting the instances of the games. It serves as proxy between the texture load unit (TLU) in the game engine and TTS and also comprises a secondary local cache 16 of textures optionally in case TTS is a remote service and network delay is a concern. The local cache caches textures that are heavily used by local game instances. It comprises the texture transcode interface unit (TTIU) 12, 14 and the feedback unit (FU) 640. The texture transcode interface unit (TTIU) 12, 14 receives the request from each individual game engine and searches the local pool 36 first. If the search returns a hit, it returns the desired texture immediately to the game instance. If not, it redirects the request to the TTS 30 for further query. As it serves only the locally used GPU, only best-fit formats of textures are cached in this local pool, for example. The feedback unit (FU) 640 may gather the textures' statistics data and feedbacks the statistics to the TTS 30 module. When a re-check request is accepted, it may mark the corresponding texture to be "checking". Next time the "checking" texture is used by game instance, the "checking" texture's original data may be sent to the TTS module 30.

The texture load unit (TLU) is a software unit which resides in user space graphics driver 20, responsible for loading textures with appropriate formats. The TLU loads textures and checks whether the format is well supported by the underlying hardware (reported by driver exposing certain flags). If not, the TLU may calculate the key for the texture (e.g., using a hash function), and uses this key to talk to TTIU 12, 14 to retrieve the desired texture.

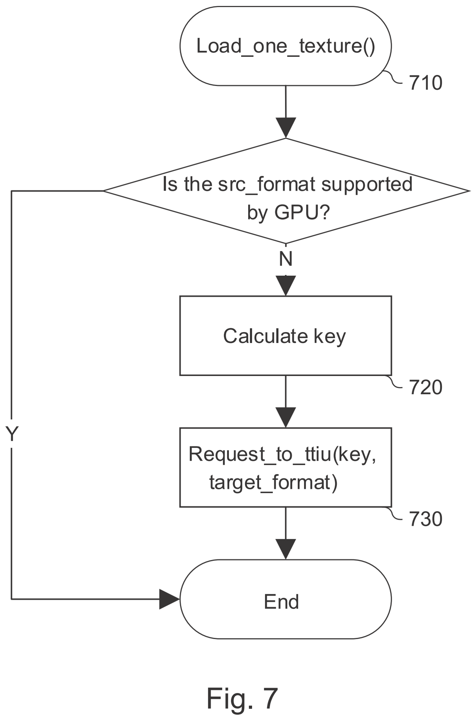

Fig. 7 shows a flow chart of an example of a flow of a texture load unit. The flow starts with the TLU being instructed to load a texture 710. If the source format is supported by the GPU, the flow ends. If not, the TLU calculates 720 the key, and sends a request 730 to the TTIU, using the key and the target format as arguments. After the request 730 is completed, the flow ends.

The key may be chosen to be light-weighted enough compared with decompressing and compressing the texture. As the number of textures per game title is limited (usually less than 100), a key conflict rarely happens even with a normal-strength key generation algorithm. If this is not the case, the FU and TSU may take care of checking and enhancing the keys.

With the proposed concept, server-grade CPUs may be able to support mobile games with more than 10 instances (assuming no graphics memory swap) and 12-15 instances (with graphics memory swap) without any runtime overhead of handling unsupported (ASTC) texture formats.

For example, the proposed concept may be implemented in the graphics software stack in order to achieve better density and performance for mobile (e.g., Android) cloud gaming scenarios. For example, the mesa OpenGL ES driver texture load unit may be modified add the flow outlined with respect to Fig. 7, and a Texture Transcoding Service may me set up to run inside the mobile (Android) cloud gaming service cluster. As can see in Fig. 7, the modification in the texture load unit of Mesa may be light.

The aspects and features described in relation to a particular one of the previous examples may also be combined with one or more of the further examples to replace an identical or similar feature of that further example or to additionally introduce the features into the further example.

In the following, some examples are presented:
An example (e.g., example 1) relates to a caching apparatus (10) comprising an interface (12) for communicating with one or more cloud gaming instances (200). The caching apparatus (10) comprises processing circuitry (14) configured to obtain requests for cached transcoded versions of textures to be used in the one or more cloud gaming instances, and provide the cached transcoded versions of the textures to the one or more cloud gaming instances.

Another example (e.g., example 2) relates to a previously described example (e.g., example 1) or to any of the examples described herein, further comprising that the processing circuitry is configured to cache the transcoded versions of the textures in a memory circuitry and/or a storage circuitry (16) of the caching apparatus.

Another example (e.g., example 3) relates to a previously described example (e.g., one of the examples 1 to 2) or to any of the examples described herein, further comprising that the cached transcoded versions of the textures are transcoded versions of textures being included in games being executed in the one or more cloud gaming instances.

Another example (e.g., example 4) relates to a previously described example (e.g., one of the examples 1 to 3) or to any of the examples described herein, further comprising that the cached transcoded versions are transcoded into a format that is supported by a graphics processing unit of a computer system being used to host the one or more cloud gaming instances.

Another example (e.g., example 5) relates to a previously described example (e.g., one of the examples 1 to 4) or to any of the examples described herein, further comprising that the requests comprise identifiers for identifying the respective texture to be provided, and the cached transcoded versions are provided based on the identifiers included in the requests.

Another example (e.g., example 6) relates to a previously described example (e.g., one of the examples 1 to 5) or to any of the examples described herein, further comprising that the requests comprise information on a desired format of the transcoded version, and wherein the cached transcoded versions are provided based on the information on the desired format.

Another example (e.g., example 7) relates to a previously described example (e.g., one of the examples 1 to 5) or to any of the examples described herein, further comprising that the processing circuitry is configured to obtain information on one or more games being executed in the one or more cloud gaming instances, and to obtain the transcoded versions of the textures for caching based on the information on the one or more games being executed in the one or more cloud gaming instances.

Another example (e.g., example 8) relates to a previously described example (e.g., example 7) or to any of the examples described herein, further comprising that the processing circuitry is configured to obtain the transcoded versions of the textures from a separate transcoding apparatus (30).

Another example (e.g., example 9) relates to a previously described example (e.g., example 8) or to any of the examples described herein, further comprising that the processing circuitry is configured to request the transcoded versions of the textures based on identifiers for identifying the respective textures to be provided and/or based on a desired format of the textures.

Another example (e.g., example 10) relates to a previously described example (e.g., example 9) or to any of the examples described herein, further comprising that the processing circuitry is configured to determine the desired format of the textures based on a texture format being supported by a graphics processing unit of a computer system being used to host the one or more cloud gaming instances.

Another example (e.g., example 11) relates to a previously described example (e.g., example 7) or to any of the examples described herein, further comprising that the processing circuitry is configured to obtain the transcoded versions of the textures by transcoding the textures being included in games being executed in the one or more cloud gaming instances.

Another example (e.g., example 12) relates to a previously described example (e.g., one of the examples 7 to 11) or to any of the examples described herein, further comprising that the information on the one or more games being executed in the one or more cloud gaming instances is obtained within the requests.

Another example (e.g., example 13) relates to a previously described example (e.g., one of the examples 7 to 12) or to any of the examples described herein, further comprising that the information on the one or more games being executed in the one or more cloud gaming instances is obtained separately from the requests.

Another example (e.g., example 14) relates to a previously described example (e.g., one of the examples 1 to 13) or to any of the examples described herein, further comprising that the processing circuitry is configured to provide the transcoded versions to a texture load unit of a user space graphics driver being executed in the respective cloud gaming instance.

An example (e.g., example 15) relates to a driver apparatus (20) for a cloud gaming instance (200), the driver apparatus comprising an interface (22) for communicating with a caching apparatus (10). The driver apparatus (20) comprises processing circuitry (24) configured to provide a graphics driver functionality for a game being executed in the cloud gaming instance, obtain an instruction for loading a texture included in the game, request a transcoded version of the texture to be loaded from the caching apparatus, obtain the transcoded version of the texture from the caching apparatus, and load the transcoded versions of the texture.

Another example (e.g., example 16) relates to a previously described example (e.g., example 15) or to any of the examples described herein, further comprising that the transcoded version of the texture is a transcoded version of a texture being included in the game.

Another example (e.g., example 17) relates to a previously described example (e.g., one of the examples 15 to 16) or to any of the examples described herein, further comprising that the graphics driver functionality is provided to calculate graphics of the game using a graphics processing unit (105) of a computer system (100) comprising the driver apparatus.

Another example (e.g., example 18) relates to a previously described example (e.g., example 17) or to any of the examples described herein, further comprising that the transcoded version of the texture is transcoded into a format that is supported by the graphics processing unit of the computer system.

Another example (e.g., example 19) relates to a previously described example (e.g., one of the examples 15 to 18) or to any of the examples described herein, further comprising that the driver functionality is provided in user space.

Another example (e.g., example 20) relates to a previously described example (e.g., one of the examples 15 to 19) or to any of the examples described herein, further comprising that the transcoded version of the texture is loaded instead of the texture included with the game.

Another example (e.g., example 21) relates to a previously described example (e.g., one of the examples 15 to 20) or to any of the examples described herein, further comprising that the request comprises one or more of an identifier for identifying the texture, information on a desired format of the transcoded version and information on the game being executed in the cloud gaming instance.

An example (e.g., example 22) relates to a transcoding apparatus (30), comprising an interface (32) for communicating with a caching apparatus (10). The transcoding apparatus (30) comprises processing circuitry (34) configured to transcode textures of a game to be executed in one or more cloud gaming instances, obtain a request for a transcoded version of a texture from the caching apparatus, and provide the transcoded version of the texture to the caching apparatus.

Another example (e.g., example 23) relates to a previously described example (e.g., example 22) or to any of the examples described herein, further comprising that the request comprises one or more of an identifier for identifying the texture to be provided and a desired format of the texture, and wherein the processing circuitry is configured to provide the transcoded versions based on the identifier and/or based on the desired format.

Another example (e.g., example 24) relates to a previously described example (e.g., one of the examples 22 to 23) or to any of the examples described herein, further comprising that the processing circuitry comprises one or more of a central processing unit, a graphics processing unit, a field-programmable gate array and an application-specific integrated circuit for transcoding, wherein one or more of the central processing unit, the graphics processing unit, the field-programmable gate array the application-specific integrated circuit for transcoding is used for transcoding the textures of the game.

An example (e.g., example 25) relates to a computer system (100) comprising the caching apparatus (10) according to one of the examples 1 to 14 (e.g., according to any previous example), the computer system being configured to host one or more cloud gaming instances (200), with each cloud gaming instances comprising a driver apparatus (20) according to one of the examples 15 to 21 (e.g., according to any previous example).

Another example (e.g., example 26) relates to a previously described example (e.g., example 25) or to any of the examples described herein, further comprising that the computer system further comprises a transcoding apparatus (30) according to one of the examples 22 to 24 (e.g., according to any previous example).

An example (e.g., example 27) relates to a caching device (10) comprising means for communicating (12) for communicating with one or more cloud gaming instances (200). The caching device (10) comprises means for processing (14) configured to obtain requests for cached transcoded versions of textures to be used in the one or more cloud gaming instances, and provide the cached transcoded versions of the textures to the one or more cloud gaming instances.

Another example (e.g., example 28) relates to a previously described example (e.g., example 27) or to any of the examples described herein, further comprising that the means for processing is configured to cache the transcoded versions of the textures in a means for storing information of the caching device.

Another example (e.g., example 29) relates to a previously described example (e.g., one of the examples 27 to 28) or to any of the examples described herein, further comprising that the cached transcoded versions of the textures are transcoded versions of textures being included in games being executed in the one or more cloud gaming instances.

Another example (e.g., example 30) relates to a previously described example (e.g., one of the examples 27 to 29) or to any of the examples described herein, further comprising that he cached transcoded versions are transcoded into a format that is supported by a graphics processing unit of a computer system being used to host the one or more cloud gaming instances.

Another example (e.g., example 31) relates to a previously described example (e.g., one of the examples 27 to 30) or to any of the examples described herein, further comprising that the requests comprise identifiers for identifying the respective texture to be provided, and the cached transcoded versions are provided based on the identifiers included in the requests.

Another example (e.g., example 32) relates to a previously described example (e.g., one of the examples 27 to 31) or to any of the examples described herein, further comprising that the requests comprise information on a desired format of the transcoded version, and wherein the cached transcoded versions are provided based on the information on the desired format.

Another example (e.g., example 33) relates to a previously described example (e.g., one of the examples 27 to 31) or to any of the examples described herein, further comprising that the means for processing is configured to obtain information on one or more games being executed in the one or more cloud gaming instances, and to obtain the transcoded versions of the textures for caching based on the information on the one or more games being executed in the one or more cloud gaming instances.

Another example (e.g., example 34) relates to a previously described example (e.g., example 33) or to any of the examples described herein, further comprising that the means for processing is configured to obtain the transcoded versions of the textures from a separate transcoding device (30).

Another example (e.g., example 35) relates to a previously described example (e.g., example 34) or to any of the examples described herein, further comprising that the means for processing is configured to request the transcoded versions of the textures based on identifiers for identifying the respective textures to be provided and/or based on a desired format of the textures.

Another example (e.g., example 36) relates to a previously described example (e.g., example 35) or to any of the examples described herein, further comprising that the means for processing is configured to determine the desired format of the textures based on a texture format being supported by a graphics processing unit of a computer system being used to host the one or more cloud gaming instances.

Another example (e.g., example 37) relates to a previously described example (e.g., example 33) or to any of the examples described herein, further comprising that the means for processing is configured to obtain the transcoded versions of the textures by transcoding the textures being included in games being executed in the one or more cloud gaming instances.

Another example (e.g., example 38) relates to a previously described example (e.g., one of the examples 33 to 37) or to any of the examples described herein, further comprising that the information on the one or more games being executed in the one or more cloud gaming instances is obtained within the requests.

Another example (e.g., example 39) relates to a previously described example (e.g., one of the examples 33 to 38) or to any of the examples described herein, further comprising that the information on the one or more games being executed in the one or more cloud gaming instances is obtained separately from the requests.

Another example (e.g., example 40) relates to a previously described example (e.g., one of the examples 33 to 39) or to any of the examples described herein, further comprising that the means for processing is configured to provide the transcoded versions to a texture load unit of a user space graphics driver being executed in the respective cloud gaming instance.

An example (e.g., example 41) relates to a driver device (20) for a cloud gaming instance (200), the driver device comprising means for communicating (22) for communicating with a caching device (10). The driver device (20) comprises means for processing (24) configured to provide a graphics driver functionality for a game being executed in the cloud gaming instance, obtain an instruction for loading a texture included in the game, request a transcoded version of the texture to be loaded from the caching device, obtain the transcoded version of the texture from the caching device, and load the transcoded versions of the texture.

Another example (e.g., example 42) relates to a previously described example (e.g., example 41) or to any of the examples described herein, further comprising that the transcoded version of the texture is a transcoded version of a texture being included in the game.

Another example (e.g., example 43) relates to a previously described example (e.g., one of the examples 41 to 42) or to any of the examples described herein, further comprising that the graphics driver functionality is provided to calculate graphics of the game using a graphics processing unit (105) of a computer system (100) comprising the driver device.

Another example (e.g., example 44) relates to a previously described example (e.g., example 43) or to any of the examples described herein, further comprising that the transcoded version of the texture is transcoded into a format that is supported by the graphics processing unit of the computer system.

Another example (e.g., example 45) relates to a previously described example (e.g., one of the examples 41 to 44) or to any of the examples described herein, further comprising that the driver functionality is provided in user space.

Another example (e.g., example 46) relates to a previously described example (e.g., one of the examples 41 to 45) or to any of the examples described herein, further comprising that the transcoded version of the texture is loaded instead of the texture included with the game.

Another example (e.g., example 47) relates to a previously described example (e.g., one of the examples 41 to 46) or to any of the examples described herein, further comprising that the request comprises one or more of an identifier for identifying the texture, information on a desired format of the transcoded version and information on the game being executed in the cloud gaming instance.

An example (e.g., example 48) relates to a transcoding device (30), comprising means for communicating (32) for communicating with a caching device (10). The transcoding device (30) comprises means for processing (34) configured to transcode textures of a game to be executed in one or more cloud gaming instances, obtain a request for a transcoded version of a texture from the caching device, and provide the transcoded version of the texture to the caching device.

Another example (e.g., example 49) relates to a previously described example (e.g., example 48) or to any of the examples described herein, further comprising that the request comprises one or more of an identifier for identifying the texture to be provided and a desired format of the texture, and wherein the means for processing is configured to provide the transcoded versions based on the identifier and/or based on the desired format.

Another example (e.g., example 50) relates to a previously described example (e.g., one of the examples 48 to 49) or to any of the examples described herein, further comprising that the means for processing comprises one or more of a central processing unit, a graphics processing unit, a field-programmable gate array and an application-specific integrated circuit for transcoding, wherein one or more of the central processing unit, the graphics processing unit, the field-programmable gate array the application-specific integrated circuit for transcoding is used for transcoding the textures of the game.

An example (e.g., example 51) relates to a computer system (100) comprising the caching device (10) according to one of the examples 27 to 40 (e.g., according to any previous example), the computer system being configured to host one or more cloud gaming instances (200), with each cloud gaming instances comprising a driver device (20) according to one of the examples 41 to 47 (e.g., according to any previous example).

Another example (e.g., example 52) relates to a previously described example (e.g., example 51) or to any of the examples described herein, further comprising that the computer system further comprises a transcoding device (30) according to one of the examples 48 to 50 or according to any previous example.

An example (e.g., example 53) relates to a caching method comprising obtaining (140) requests for cached transcoded versions of textures to be used in one or more cloud gaming instances. The caching method comprises providing (150) the cached transcoded versions of the textures to the one or more cloud gaming instances.

Another example (e.g., example 54) relates to a previously described example (e.g., example 1) or to any of the examples described herein, further comprising that the method comprises caching (130) the transcoded versions of the textures in a memory circuitry and/or a storage circuitry.

Another example (e.g., example 55) relates to a previously described example (e.g., one of the examples 53 to 54) or to any of the examples described herein, further comprising that the cached transcoded versions of the textures are transcoded versions of textures being included in games being executed in the one or more cloud gaming instances.

Another example (e.g., example 56) relates to a previously described example (e.g., one of the examples 53 to 55) or to any of the examples described herein, further comprising that the cached transcoded versions are transcoded into a format that is supported by a graphics processing unit of a computer system being used to host the one or more cloud gaming instances.

Another example (e.g., example 57) relates to a previously described example (e.g., one of the examples 53 to 56) or to any of the examples described herein, further comprising that the requests comprise identifiers for identifying the respective texture to be provided, and the cached transcoded versions are provided based on the identifiers included in the requests.

Another example (e.g., example 58) relates to a previously described example (e.g., one of the examples 53 to 57) or to any of the examples described herein, further comprising that the requests comprise information on a desired format of the transcoded version, and wherein the cached transcoded versions are provided based on the information on the desired format.

Another example (e.g., example 59) relates to a previously described example (e.g., one of the examples 53 to 57) or to any of the examples described herein, further comprising that the method comprises obtaining (110) information on one or more games being executed in the one or more cloud gaming instances and obtaining (120) the transcoded versions of the textures for caching based on the information on the one or more games being executed in the one or more cloud gaming instances.

Another example (e.g., example 60) relates to a previously described example (e.g., example 59) or to any of the examples described herein, further comprising that the method comprises obtaining (122) the transcoded versions of the textures from a separate transcoding apparatus.

Another example (e.g., example 61) relates to a previously described example (e.g., example 60) or to any of the examples described herein, further comprising that the method comprises requesting (114) the transcoded versions of the textures based on identifiers for identifying the respective textures to be provided and/or based on a desired format of the textures.

Another example (e.g., example 62) relates to a previously described example (e.g., example 61) or to any of the examples described herein, further comprising that the method comprises determining (112) the desired format of the textures based on a texture format being supported by a graphics processing unit of a computer system being used to host the one or more cloud gaming instances.

Another example (e.g., example 63) relates to a previously described example (e.g., example 59) or to any of the examples described herein, further comprising that the method comprises obtaining (120) the transcoded versions of the textures by transcoding (124) the textures being included in games being executed in the one or more cloud gaming instances.

Another example (e.g., example 64) relates to a previously described example (e.g., one of the examples 59 to 63) or to any of the examples described herein, further comprising that the information on the one or more games being executed in the one or more cloud gaming instances is obtained within the requests.

Another example (e.g., example 65) relates to a previously described example (e.g., one of the examples 59 to 64) or to any of the examples described herein, further comprising that the information on the one or more games being executed in the one or more cloud gaming instances is obtained separately from the requests.

Another example (e.g., example 66) relates to a previously described example (e.g., one of the examples 53 to 65) or to any of the examples described herein, further comprising that the method comprises providing (150) the transcoded versions to a texture load unit of a user space graphics driver being executed in the respective cloud gaming instance.

An example (e.g., example 67) relates to a driver method for a cloud gaming instance (200), the driver method comprising providing (210) a graphics driver functionality for a game being executed in the cloud gaming instance. The driver method comprises obtaining (220) an instruction for loading a texture included in the game. The driver method comprises requesting (230) a transcoded version of the texture to be loaded from a caching apparatus. The driver method comprises obtaining (240) the transcoded version of the texture from the caching apparatus. The driver method comprises loading (250) the transcoded versions of the texture.

Another example (e.g., example 68) relates to a previously described example (e.g., example 67) or to any of the examples described herein, further comprising that the transcoded version of the texture is a transcoded version of a texture being included in the game.

Another example (e.g., example 69) relates to a previously described example (e.g., one of the examples 67 to 68) or to any of the examples described herein, further comprising that the graphics driver functionality is provided to calculate graphics of the game using a graphics processing unit (105) of a computer system (100) executing the driver method.

Another example (e.g., example 70) relates to a previously described example (e.g., example 69) or to any of the examples described herein, further comprising that the transcoded version of the texture is transcoded into a format that is supported by the graphics processing unit of the computer system.

Another example (e.g., example 71) relates to a previously described example (e.g., one of the examples 67 to 70) or to any of the examples described herein, further comprising that the driver functionality is provided in user space.

Another example (e.g., example 72) relates to a previously described example (e.g., one of the examples 67 to 71) or to any of the examples described herein, further comprising that the transcoded version of the texture is loaded instead of the texture included with the game.

Another example (e.g., example 73) relates to a previously described example (e.g., one of the examples 67 to 72) or to any of the examples described herein, further comprising that the request comprises one or more of an identifier for identifying the texture, information on a desired format of the transcoded version and information on the game being executed in the cloud gaming instance.

An example (e.g., example 74) relates to a transcoding method, comprising transcoding (310) textures of a game to be executed in one or more cloud gaming instances. The transcoding method (30) comprises obtaining (320) a request for a transcoded version of a texture from the caching apparatus. The transcoding method comprises providing (330) the transcoded version of the texture to the caching apparatus.

Another example (e.g., example 75) relates to a previously described example (e.g., example 74) or to any of the examples described herein, further comprising that the request comprises one or more of an identifier for identifying the texture to be provided and a desired format of the texture, and wherein the processing circuitry is configured to provide the transcoded versions based on the identifier and/or based on the desired format.

Another example (e.g., example 76) relates to a previously described example (e.g., one of the examples 74 to 75) or to any of the examples described herein, further comprising that the transcoding is performed using processing circuitry, the processing circuitry comprising one or more of a central processing unit, a graphics processing unit, a field-programmable gate array and an application-specific integrated circuit for transcoding, wherein one or more of the central processing unit, the graphics processing unit, the field-programmable gate array the application-specific integrated circuit for transcoding is used for transcoding the textures of the game.

An example (e.g., example 77) relates to a computer system (100) being configured to perform the caching method (10) according to one of the examples 53 to 66 (or according to any previous example), the computer system being configured to host one or more cloud gaming instances (200), with each cloud gaming instances being configured to perform a driver method (20) according to one of the examples 67 to 73 (or according to any previous example).

Another example (e.g., example 78) relates to a previously described example (e.g., example 77) or to any of the examples described herein, further comprising that the computer system is further configured to perform a transcoding method (30) according to one of the examples 74 to 76 or according to any previous example.

An example (e.g., example 79) relates to a machine-readable storage medium including program code, when executed, to cause a machine to perform at least one of the method according to one of the examples 53 to 66, the method according to one of the examples 67 to 73 and the method according to one of the examples 74 to 76 or to any method described herein.

An example (e.g., example 80) relates to a computer program having a program code for performing at least one of the method according to one of the examples 53 to 66, the method according to one of the examples 67 to 73 and the method according to one of the examples 74 to 76, or to any method described herein when the computer program is executed on a computer, a processor, or a programmable hardware component.

An example (e.g., example 81) relates to a machine-readable storage including machine readable instructions, when executed, to implement a method or realize an apparatus as claimed in any pending claim or shown in any example.

Examples may further be or relate to a (computer) program including a program code to execute one or more of the above methods when the program is executed on a computer, processor, or other programmable hardware component. Thus, steps, operations, or processes of different ones of the methods described above may also be executed by programmed computers, processors, or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations, or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process, or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

The disclosed methods, apparatuses, and systems are not to be construed as limiting in any way. Instead, the present disclosure is directed toward all novel and nonobvious features and aspects of the various disclosed examples, alone and in various combinations and subcombinations with one another. The disclosed methods, apparatuses, and systems are not limited to any specific aspect or feature or combination thereof, nor do the disclosed examples require that any one or more specific advantages be present or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus, comprising:
processing circuitry comprising a graphics processing unit, GPU, wherein the processing circuitry is configured to:
transcode one or more textures to a selected format for execution,
cache the transcoded textures for subsequent reuse.

2. The transcoding apparatus according to claim 1, wherein the selected format is a BC7 format.

3. The transcoding apparatus according to one of the claims 1 or 2, wherein the processing circuitry is configured to store transcoded versions of the textures in a cache.

4. The transcoding apparatus according to one of the claims 1 to 3, wherein the one or more textures are associated with a game.

5. The transcoding apparatus according to claim 4, wherein the game is a game to be executed in one or more cloud gaming instances.

6. The transcoding apparatus according to one of the claims 4 or 5, wherein the processing circuitry is configured to determine the selected format based on a texture format supported by a host of the cloud gaming instance.

7. The transcoding apparatus according to one of the claims 4 to 6, wherein the GPU is used for transcoding the one or more textures.

8. A method for a computer system, comprising:
transcoding, by a graphics processing unit (GPU), one or more textures to a selected format for execution; and
caching the transcoded textures for subsequent use.

9. The method according to claim 8, wherein the selected format is a BC7 format.

10. The method according to one of the claims 8 or 9, wherein transcoded versions of the textures are stored in a cache.

11. The method according to one of the claims 8 to 10, wherein the one or more textures are associated with a game.

12. The method according to one of the claims 8 to 11, wherein the game is a game to be executed in one or more cloud gaming instances.

13. The method according to one of the claims 8 to 12, wherein the method comprises determining the selected format based on a texture format supported by a host of the cloud gaming instance.

14. The method according to one of the claims 8 to 13, wherein the GPU is used for transcoding the one or more textures.

15. A computer program having a program code for performing the method of one of the claims 8 to 14, when the computer program is executed on a computer, a processor, or a programmable hardware component.
